# EUROPEAN PATENT SPECIFICATION

(11) **EP 0 652 081 B1**
(45) Date of publication and mention of the grant of the patent: **19.01.2000**
(21) Application number: 93308883.3
(22) Date of filing: 08.11.1993
(51) Int. Cl.: B25G 1/04, B27B 17/00, A01G 3/025

(54) **Tool extension attachment**
Werkzeugverlängerungseinrichtung
Dispositif d'extension pour un outil

(43) Date of publication of application: 10.05.1995
(73) Proprietor: Bailey, Peter J.D., Nr Royston, Herfordshire SG8 0RD (GB)
(72) Inventor: Bailey, Peter J.D., Nr Royston, Herfordshire SG8 0RD (GB)
(74) Representative: Nash, Keith Wilfrid

(56) References cited:
- CH-A- 196 896
- DE-A- 3 904 965
- GB-A- 2 233 599
- GB-A- 2 266 682
- US-A- 2 698 034
- US-A- 3 236 036
- US-A- 4 207 675
- US-A- 4 359 822
- US-A- 4 760 646

## Description

### Field of the invention

This invention relates to an attachment according to the pre-characterising portion of claim 1 for a tool, (typically a power tool) to extend the normal range of operation to an increased distance from the user, especially in height. Such an attachment is known from US-A-4207675. The invention is of particular application to a power pruning saw or more especially a hedge trimmer, but is not limited to such devices which are mentioned by way of example only.

### Background to the invention

In use of a domestic or an industrial hedge trimmer, the range of operation is normally limited to a height of the order of the height of a operator. Where trimming of a high hedge is required, ladders or steps have to be employed to enable the operator to access the higher parts of the hedge. Sometimes, as when a hedge is sited on top of a bank, the erection of some form of scaffolding is necessary. The same problem can arise with a power pruner or saw for cutting the overhead branches of trees, and with any powered tools such as drills, buffing and sanding tools, paint spraying apparatus, grinding tools and the like.

US-A-4,760,646, DE-A-3904964 and CH-A-196896 disclose prior art embodiments of tool extension attachments which attempt to allow for trimming of high branches and the like. US-A-4,207,675 provides an extension handle for an electrically powered hand tool.

It is an object of this invention to provide a solution to the aforesaid problem, whereby the use of ladders, steps or scaffolding is rendered unnecessary when using powered tools such as when using a hedge trimmer for trimming or cutting up to a certain level above the normal maximum possible height.

### The invention

According to one aspect of the present invention, there is provided a power tool extension attachment comprising a main spar, a cradle pivotally mounted at a forward end of the main spar for detachably holding the tool, handle means joined to the spar at a position intermediate the ends thereof, control means on or adjacent the handle means for controlling operation of the power tool, control arm means mounted for movement relative to the main spar and force transfer means interconnecting the control arm means and the tool cradle, characterised in that the control arm means is pivotally mounted so that at least the angle of tilt of the axis of the tool is adjustable relative to the axis of the main spar by pivotal movement of the control arm means relative to the spar.

Preferably, the cradle and the control arm are pivotally mounted relative to the main spar and interconnected so that not only the tilt but also the pan of for example a cutting blade driven by the tool can be adjusted, i.e. the angle of orientation of the cutting blade to the tool about its axis can be adjusted.

Tilt of the tool cradle is preferably controlled by pivotal forward and backward movement of the control arm relative to the length of the main spar, whilst pan may be controlled by rotation of the control arm about the main spar. This control can be enabled by use of two force transfer means interconnecting the control arm and the cradle.

The control means may for example control the supply of electrical power to an electrically powered tool from the region of the handle, where a socket may be provided for connection of a power supply lead. In use, the in-built power switch on the tool may be fixed in the "on" condition, and a power connecting lead extending from the handle region through the said control means will plug into the in-built power supply socket on the power tool. This connecting lead may incorporate a coiled section to accommodate expansion and reduction in length when the power tool is adjusted in position.

The degree of tilt available will preferably be at least 90 degrees so that, in the case of a hedge trimmer for example, the horizontal flat top of a high hedge can be trimmed as well as its vertical sides.

Preferably, behind the handle, the rear end of the main spar is adapted to carry a counterweight.

A shoulder strap may be provided for assistance in supporting the weight of the equipment.

Alternatively a shoulder pad or harness may be fitted to the spar between the handle means and the rear end of the main spar, so that the latter can be supported on the shoulder of a user. In this event the control arm preferably extends laterally on opposite sides of the spar and includes downward extensions forming two handles on opposite sides of the main spar, to be gripped by both hands of the user in much the same way as a bicycle handlebar is held by a cyclist, to enable the user to both lift, control and steer the main spar and the tool hand grips may be provided on the lower ends of the downwardly extending handles.

The position of the control arm and/or handle means along the length of the spar may be adjustable, as may be the position and/or weight of the counterweight, to enclose different tool weights to be balanced.

The force transfer means may comprise rods or cables or levers or any combination thereof.

The control arm may for example comprise a lever pivotally mounted on the spar on the handle means or a pistol grip and trigger likewise mounted.

Quick release locking means may be provided to allow the control means and/or the control arm to be secured in a desired position.

The invention also extends to a kit of parts for construction of the afore-described power tool extension attachment.

Thus, in accordance with a further aspect of the invention there is provided a kit of parts comprising a main spar which can be assembled from two or more spar lengths, means for assembly of a tool cradle and for mounting said cradle to a forward end of the main spar, handle means mounted on or mountable on the main spar intermediate the ends thereof said handle incorporating a control means for controlling operation of a power tool carried by the cradle, and either comprising or having mounted near thereto control arm means movable relative to the main spar and at least one force transfer means interconnectable between the control arm means and the cradle to enable at least the tilt of a tool carried thereon to be adjusted.

While not limited thereto, the invention has particular applicability to an extension attachment for a hedge trimmer but any power tool may be fitted to an extension attachment embodying the invention.

### Description of embodiments

An extension attachment in accordance with the invention will now be described by way of example with reference to the accompanying drawings, in which:-
- Figures 1 and 2: show a first embodiment of the attachment of the invention, with a power hedge trimming tool mounted thereto, in respective side views mutually at right angles;
- Figures 3 to 5: show details of a handle assembly, cradle assembly and control arm assembly, respectively;
- Figures 6 and 7: show the attachment and hedge trimmer mounted thereto, when in use for trimming the vertical side of a high hedge;
- Figure 8: shows the attachment and hedge trimmer mounted thereto, when in use for trimming the horizontal top of a high hedge;
- Figure 9: shows an alternative embodiment of the attachment of the invention with alternative handle assembly supported by means of a shoulder harness, when in use for trimming a high hedge; and
- Figure 10: shows details of the alternative handle assembly

The illustrated and described embodiment supports an electrically powered hedge trimmer to enable the trimming of vertical sides of hedges up to about 3.8 metres high, and the trimming of flat tops of hedges up to about 3 metres high. The attachment provides for both tilt and pan adjustment, but pan adjustment is generally required only when trimming a vertical hedge side, enabling the operator to traverse sideways whilst maintaining the trimmer blade width parallel to the face being trimmed.

The drawings illustrate the principle of the device, and a simple method of construction possible with minimum special tooling. This method of manufacture is merely an example, and improvements may be made for volume production by replacing fabricated assemblies with, e.g., injection mouldings or diecastings.

The device is especially intended to be supplied in a part-assembled form, so that the packaged product is no longer than 1250 mm, for convenience of palleted transport, and easy display on shop shelving.

The drawings show a typical and commonly used model of hedge trimmer, but the device is adaptable to enable a range of different models to be mounted thereto.

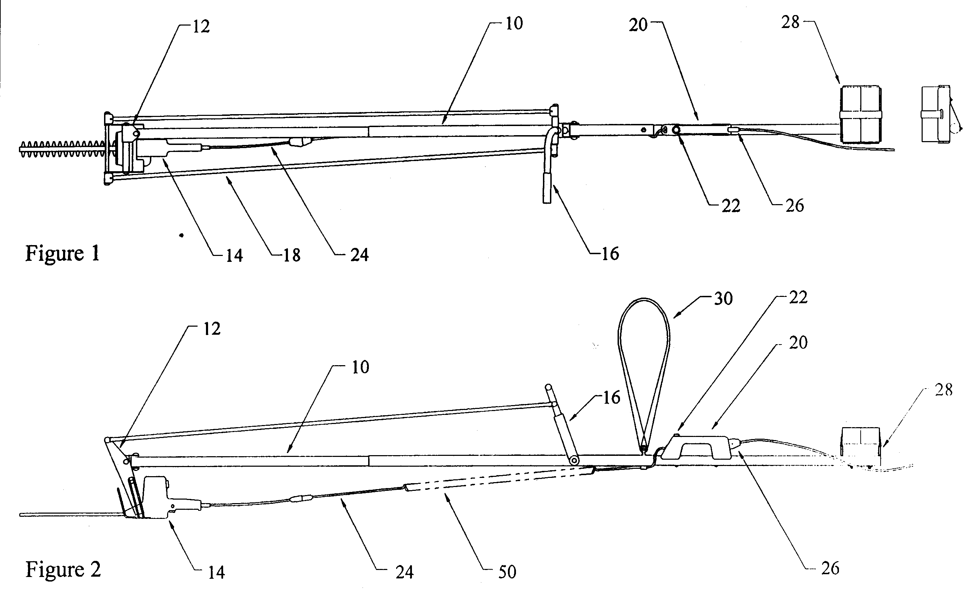

Referring to Figures 1 and 2, the device or attachment comprises a main spar 10, a cradle 12 for the trimmer 14 pivotally mounted at the front end of the main spar, a control arm 16, two thrust transmitting means such as rods 18 interconnecting the control arm 16 and the cradle 12, a handle 20, an on/off switch 22 on the handle, a cable 24 connecting a power input socket 26 on the handle with a power input socket on the trimmer 14, a counterweight carrier 28 and a shoulder strap 30.

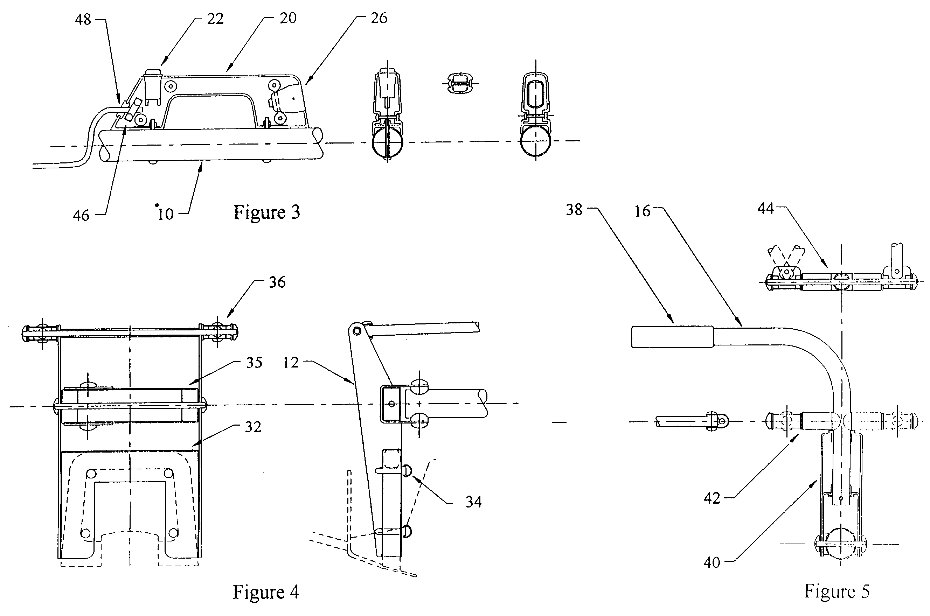

These parts are illustrated in Figures 3 to 5 and now briefly described with reference thereto.

The main spar 10 is made of tube, in three pieces that fit inside each other, and bolted together by the user, of strong, lightweight material, e.g. heat treated aluminium alloy or carbon fibre composite.

The trimmer cradle 12 is a fabricated assembly made up of an inverted "U", of a channel section 32, that fits over the cross handle of the trimmer. Aircraft type rigging pins 34 with sprung ball detents are inserted through holes in this U member, to allow quick attachment or removal of the trimmer. Holes in different positions as necessary can be used for different models of trimmer. Extended side plates are permanently attached to the U member, and have pivots for a tubular axle beam 35, and clevis bearings 36 for control rods at the top. The axle beam has an offset clevis bracket, which is attached to the main spar pivotally at right angles to the axle.

The control arm 16 is a bent tube of inverted "L" shape, fitted with a cycle type handgrip 38, that is mounted pivotally and axial vertically in a trunnion 40 that is pivotally attached to the main spar, in a direction parallel to the trimmer cradle axle. The position of this pivot is approximately two thirds of the way along the main spar, from the trimmer end. Above the trunnion, a cross tree beam 42 is pivotally mounted parallel to the trunnion axis, which carries a control rod clevis at each end.

The thrust transmitting rods 18 are preferably also made of tube, each in two main parts, bolted together by the strong material, e.g. aluminium alloy. A through hole is drilled near to each end, parallel in axis. A domed plastics insert fits in each end, and is secured by the pivot pin fitted through the clevises at the control arm and trimmer cradle assemblies. The clevises form universal joints, with horizontal "U" members that pivot around their respective axles and plastics shoulder bushes, retained by pivot pins, with the domed inserts bearing against the axles, as indicated at 44.

The thrust transmitting rods 18 may be replaced by levers or cables, typically a Bowden cable or cables.

The handle 20 is made of non-conducting material for electrical safety, and is typically a two part injection moulding. The handle 20 is bolted to the main spar 10 a short way behind the control arm, and incorporates a momentary action push button switch 22, a standard garden appliance connector 26, internal cable clamp 46, and a grommeted cable outlet 48. Internal wiring connects the connector to the switch, where the outlet cable is also connected, and clamped before its outlet through the grommeted hole at the front.

The cable 24 is routed from the handle around the main spar to a cable clamp on the bottom surface, and thence to the trimmer, terminating in a standard garden appliance connector. It can thus be seen that the supply cable lead can conveniently be plugged directly into the trimmer for independent use, or into the handle of the extension arm for use in that mode. The outlet cable has part of its length formed into a lightly sprung coiled length 50, which helps to tidily manage the variance in distance between the trimmer and the control arm during operation.

The counterweight carrier 28 is a formed tray, mounted to the extreme end of the main spar, and is proportioned to accept a weight to counterbalance the moment of the front extension with the trimmer attached. This weight can conveniently be, e.g., two house bricks, which are commonly available. An elastic strap retains the bricks properly in place.

The shoulder strap 30 is a golf bag type strap, suitably padded for comfort, and pivotally connected to an eye-bolt on the main spar, between the control arm and the handle, at the notional centre of gravity of the assembled device.

In use the integral switch on the hedge trimmer is set to permanently on and, for safety, before the supply cable lead is plugged into the handle of the extension arm device. Some trimmers cannot be switched permanently on, so a supplied plastic clamp would be used in this case.

With the strap over one shoulder, the device should approximately balance horizontally for the most convenient use.

When the control arm is moved forwards or backwards, the trimmer tilts in the same direction.

When the control arm is turned, the trimmer will also turn.

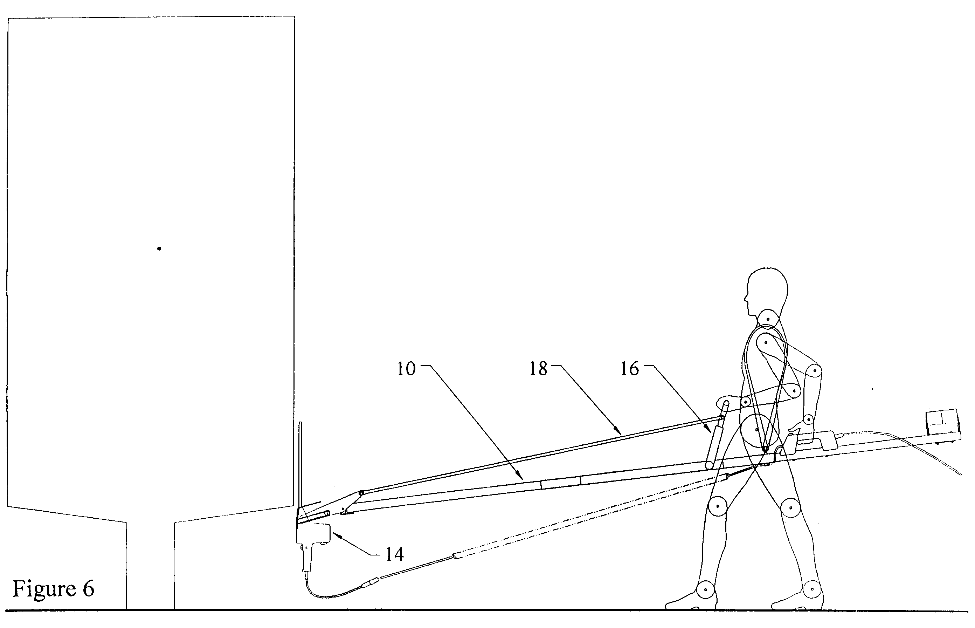

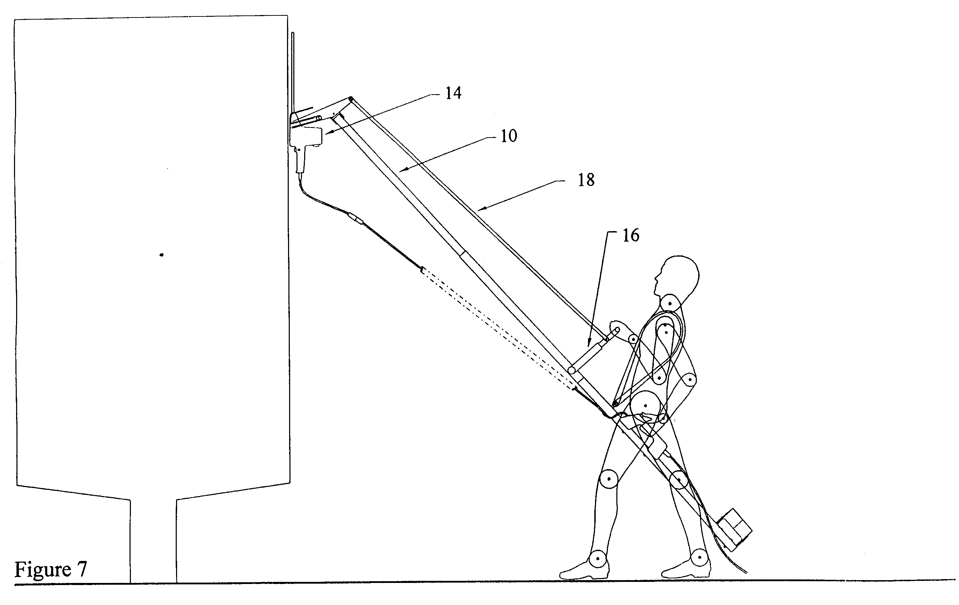

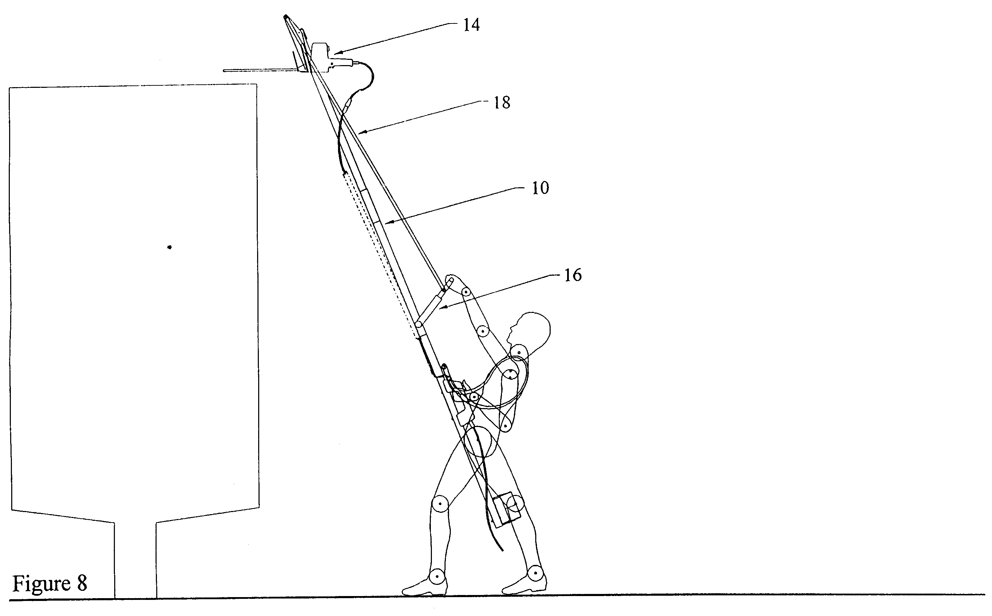

The operations shown in Figures 6, 7 and 8 can therefore be achieved in a more convenient time and fashion than possible without the device.

When the mode is for trimming the extremes in height, the user has to lift the device via the handle, to obtain extra reach. The effort in doing this is more than for the lower areas, as the benefit of support from the shoulder strap is lost, but would be occasional, not continuous effort. The overall weight of the device with trimmer and counterbalance is approximately the same as a full set of golf clubs, and for the average hedge, the time spent trimming would be minutes rather than hours.

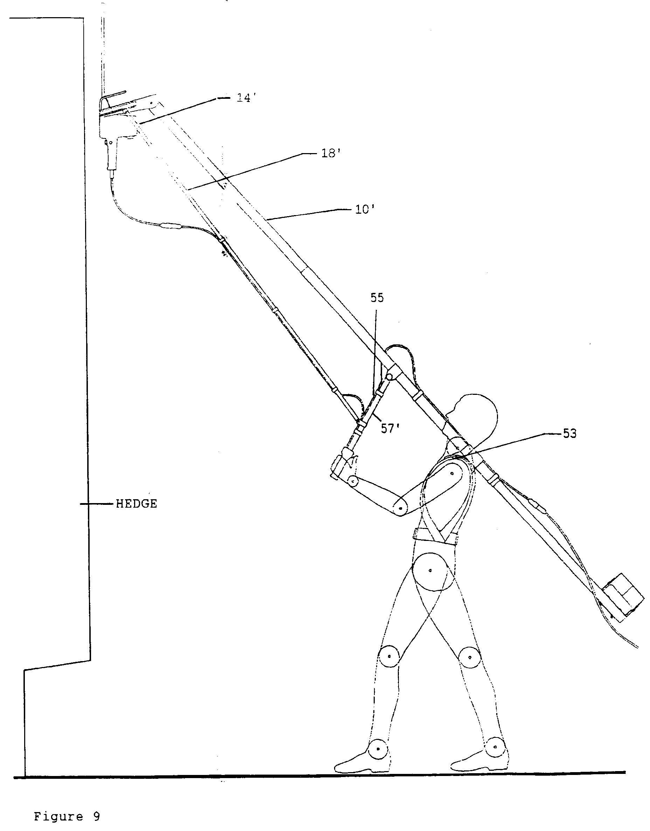

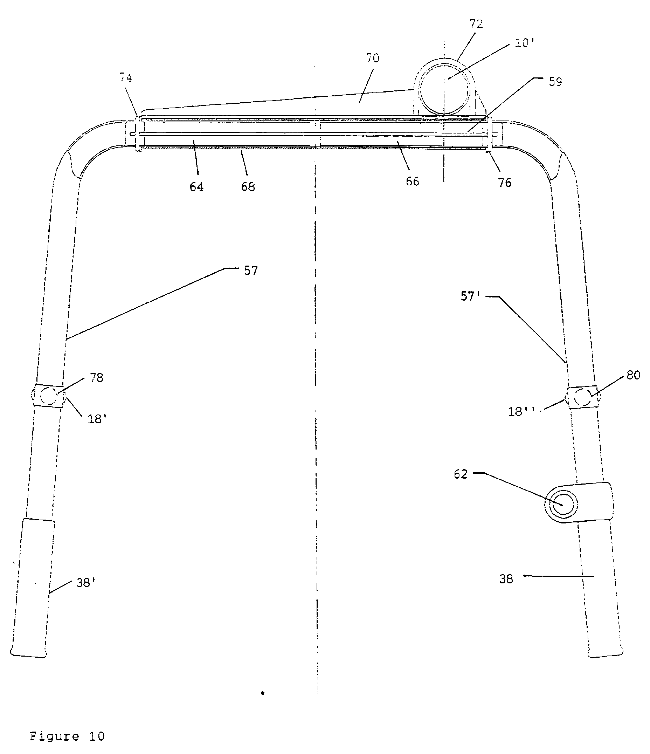

In an alternative embodiment as shown in Figure 9 spar 10' of the extension attachment is supported on a padded shoulder harness 53, with a quick release compliant pivot at its longitudinal centre of gravity. Operation of the attachment is achieved by use of the handle assembly 55 as shown in Figure 10.

The handle assembly 55 includes dual control arms 57, 57' with hand grips 38, 38' connected by a torsion bar 59. Differential fore and aft movement of the arms 57, 57', enables pan adjustment. The arms 57, 57' spring back to their neutral position on relase due to the torsion bar.

Movement of the arms for levers fore and aft, equally, enables simple tilting of the trimmer.

A switch 62 is provided on the handle assembly to control the supply of power to the tool.

This embodiment of the invention provides greater reach due to the pivot point being on the shoulder, less chance of the counterbalance weight hitting the ground due to increased elevation of the pivot point, and greater control as all functions are controlled by dual handles.

The opposed ends 64, 66 of the two control lever arms 57, 57' are received in a bearing tube 68 which is carried transversely relative to the spar 10' by a bracket 70 to which is secured a clamp 72 for clamping around the tubular spar 10'.

The ends 64, 66 are hollow to allow the strip torsion bar 59 to extend therethrough as shown in Figure 10. Pins 74, 76 driven through holes in the tubular lever ends 64, 66 and through aligned holes in the ends of the torsion bar 59, not only key the lever arms to the bar, but also retain the lever in the sleeve (tube) 68.

The ends of the two rods (18', 18'') (one of which is visible in Figure 9 and is identified by reference numeral 18'), which are joined by the lever arms 57, 57', are attached thereto by pivoting joints 78, 80.

The tool may be electrically powered as illustrated herein, or air-line powered or self-powered for example by an internal combustion engine or by any other known power means.

Various modifications of the above described and illustrated arrangement are possible within the scope of the invention as defined in the appended claims.

## Claims (Claims for the following Contracting State(s): DE, FR, NL)

1. A power tool extension attachment comprising a main spar (10, 10'), a cradle (12) pivotally mounted at a forward end of the main spar for detachably holding the tool (14), handle means (20, 57) joined to the spar at a position intermediate the ends thereof, control means (22, 62) on or adjacent the handle means for controlling operation of the power tool, control arm means (16; 57, 57') mounted for movement relative to the main spar and force transfer means (18) interconnecting the control arm means and the tool cradle, characterised in that the control arm means is pivotally mounted so that at least the angle of tilt of the axis of the tool is adjustable relative to the axis of the main spar by pivotal movement of the control arm means relative to the spar.

2. An attachment according to claim 1, in which the force transfer means comprises a control rod (18; 18).

3. An attachment according to claim 1 or claim 2, wherein tilt of the tool cradle is controlled by pivotal forward and backward movement of the control arm means relative to the length of the main spar.

4. An attachment according to claim 1, or claim 2 or claim 3, wherein the cradle and the control arm means are pivotally mounted relative to the main spar and interconnected so that not only the tilt but also the pan of the tool is adjustable.

5. An attachment according to claim 4, wherein pan of the tool cradle is controlled by rotation of the control arm means about the main spar.

6. An attachment according to claim 4 or claim 5, wherein tilt and pan control as aforesaid is enabled by use of two force transfer means interconnecting the control arm means and the cradle.

7. An attachment according to claim 6, in which the two force transfer means comprise a pair of parallel connecting rods.

8. An attachment according to any of claims 1 to 7, in which the tool is electrically powered and electric current therefor is supplied for the control means through a cable, part of which is coiled to accommodate expansion and reduction in length when the tool is adjusted in position.

9. An attachment according to any of claims 1 to 8, wherein behind the handle means, the main spar is adapted to carry a counterweight.

10. An attachment according to any of claims 1 to 9, wherein support means is provided for transferring at least some of the weight of the equipment to the shoulder of the user.

11. An attachment according to any of claims 1 to 10, wherein the control arm means comprises two control arms (57, 57') which extend laterally on opposite sides of the main spar and downward extensions thereof comprise the handle means (57, 57') and hand grips (38, 38') are provided thereon to enable the handle means to be gripped by the user using both hands, in use.

12. An attachment according to claim 11, in which the control arms and force transfer means are so arranged that differential fore and aft movement of the control arms (57, 57') causes the tool to pan, whilst equal fore and aft movement of the control arms (57, 57') adjusts said angle of tilt.

13. A kit of parts of a power tool extension attachment according to any of the preceding claims. comprising a main spar which can be assembled from two or more spar lengths, means for assembly of a tool cradle and for mounting said cradle to a forward end of the main spar, handle means mounted on or mountable on the main spar intermediate the ends thereof, said handle incorporating a control means for controlling operation of a power tool carried by the cradle, and either comprising or having pivotally mounted near thereto control arm means pivotally moveable relative to the spar and at least one force transfer means interconnectable between the control arm means and the cradle to enable at least the tilt of a tool carried thereon to be adjusted.

## Claims (Claims for the following Contracting State(s): GB)

1. A power tool extension attachment comprising a main spar, (10, 10') a cradle (12) pivotally mounted at a forward end of the main spar for detachably holding the tool (14), handle means (20, 57) joined to the spar at a position intermediate the ends thereof, control means (22, 62) on or adjacent the handle means for controlling operation of the power tool, control arm means (16; 57, 57') mounted for movement relative to the main spar and force transfer means (18) interconnecting the control arm means and the tool cradle, characterised in that the control arm means is pivotally mounted so that at least the angle of tilt of the axis of the tool is adjustable relative to the axis of the main spar by pivotal movement of the control arm means relative to the spar, the control arm means comprising two control arms which extend laterally on opposite sides of the main spar and downward extensions thereof comprise the handle means (57, 57') and hand grips (38, 38') being provided thereon to enable the handle means to be gripped by the user using both hands, in use.

2. An attachment according to claim 1, wherein the cradle and the control arm means are pivotally mounted relative to the main spar and interconnected so that not only the tilt but also the pan of the tool is adjustable.

3. An attachment according to claim 2, in which the control arms and force transfer means are so arranged that differential fore and aft movement of the control arms (57, 57') causes the tool to pan, whilst equal fore and aft movement of the control arms (57, 57') adjusts said angle of tilt.

4. An attachment according to claim 2 or 3, wherein tilt and pan control as aforesaid is enabled by use of two force transfer means interconnecting the control arm means and the cradle.

5. An attachment according to claim 4, in which the force transfer means comprise a pair of connecting rods.

6. An attachment according to any of claims 1 to 5, in which the tool is electrically powered and electric current therefor is supplied for the control means through a cable, part of which is coiled to accommodate expansion and reduction in length when the tool is adjusted in position.

7. An attachment according to any of claims 1 to 6, wherein, behind the handle means, the main spar is adapted to carry a counterweight.

8. An attachment according to any of claims 1 to 7, wherein support means is provided for transferring at least some of the weight of the equipment to the shoulder of the user.

9. A kit of parts of a power tool extension attachment according to any of the preceding claims, comprising a main spar which can be assembled from two or more spar lengths, means for assembly of a tool cradle and for mounting said cradle to a forward end of the main spar, handle means mounted on or mountable on the main spar intermediate the ends thereof, said handle incorporating a control means for controlling operation of a power tool carried by the cradle, and either comprising or having pivotally mounted near thereto control arm means pivotally moveable relative to the spar and at least one force transfer means interconnectable between the control arm means and the cradle to enable at least the tilt of a tool carried thereon to be adjusted.

## Patentansprüche (Patentansprüche für folgende(n) Vertragsstaat(en): DE, FR, NL)

1. Eine Verlängerungseinrichtung für ein motorisch angetriebenes Werkzeug mit einem Hauptausleger (10, 10'), mit einer an dessen vorderem Ende zum lösbaren Halten des Werkzeugs (14) schwenkbar befestigten Wiege (12), mit mit dem Ausleger an einer Stelle zwischen dessen Enden verbundenen Griffmitteln (20, 57), mit Steuermitteln (22, 62) auf oder an den Griffmitteln zum Steuern des Betriebes des motorisch angetriebenen Werkzeugs, mit einem zur Bewegung gegenüber dem Hauptausleger befestigten Steuerarmmittel (16; 57, 57') und mit das Steuerarmmittel und die Werkzeugwiege verbindenden Kraftübertragungsmitteln (18), dadurch gekennzeichnet, daß das Steuerarmmittel schwenkbar befestigt ist, so daß mindestens der Kippwinkel der Achse des Werkzeugs gegenüber der Achse des Hauptauslegers durch eine Schwenkbewegung des Steuerarmmittels gegenüber dem Ausleger einstellbar ist.

2. Eine Einrichtung nach Anspruch 1, bei dem das Kraftübertragungsmittel eine Steuerstange (18, 18) ist.

3. Eine Einrichtung nach Anspruch 1 oder Anspruch 2, bei dem das Kippen der Werkzeugwiege durch eine Schwenkbewegung des Steuerarmmittels nach vorne und hinten gegenüber der Länge des Hauptauslegers gesteuert wird.

4. Eine Einrichtung nach Anspruch 1 oder Anspruch 2 oder Anspruch 3, bei dem die Wiege und das Steuerarmmittel gegenüber dem Hauptausleger schwenkbar befestigt und so miteinander verbunden sind, daß nicht nur der Kippwinkel, sondern auch die Schwenkstellung des Werkzeugs in der Horizontalen einstellbar ist.

5. Eine Einrichtung nach Anspruch 4, bei der die Schwenkstellung der Werkzeugwiege in der Horizontalen durch Drehung des Steuerarmmittels um den Hauptausleger gesteuert wird.

6. Eine Einrichtung nach Anspruch 4 oder Anspruch 5, bei der die Steuerung des Kippwinkels und der Schwenkstellung in der Horizontalen wie oben genannt durch Verwendung von zwei das Steuerarmmittel und die Wiege verbindenden Kraftübertragungsmitteln bewirkt wird.

7. Eine Einrichtung nach Anspruch 6, bei der die beiden Kraftübertragungsmittel zwei parallele Verbindungsstangen sind.

8. Eine Einrichtung nach irgendeinem der Ansprüche 1 bis 7, bei der das Werkzeug elektrisch angetrieben wird und der dafür notwendige elektrische Strom für das Steuermittel durch ein Kabel zugeführt wird, das zur Aufnahme der Längendehnung und -minderung bei Verstellen des Werkzeugs in seiner Stellung teilweise aufgewickelt ist.

9. Eine Einrichtung nach irgendeinem der Ansprüche 1 bis 8, bei der der Hauptausleger hinter den Griffmitteln ein Gegengewicht tragen kann.

10. Eine Einrichtung nach irgendeinem der Ansprüche 1 bis 9, bei der ein Stützmittel zum Übertragen mindestens eines Teils des Gewichtes der Ausrüstung auf die Schulter des Anwenders vorgesehen ist.

11. Eine Einrichtung nach irgendeinem der Ansprüche 1 bis 10, bei der das Steuerarmmittel zwei Steuerarme (57, 57') umfaßt, die seitlich auf einander gegenüberliegenden Seiten des Hauptausleges verlaufen, und Verlängerungen nach unten die Griffmittel (57, 57') umfassen und Handgriffe (38, 38') auf diesen zum Ermöglichen des Erfassens der Griffmittel durch den Anwender unter Verwendung beider Hände bei Gebrauch vorgesehen sind.

12. Eine Einrichtung nach Anspruch 11, bei der die Steuerarme und die Kraftübertragungsmittel so eingerichtet sind, daß eine differentielle Vor- und Rückbewegung der Steuerarme (57, 57') ein Schwenken des Werkzeugs in der Horizontalen bewirkt, während eine gleiche Vor- und Rückbewegung der Steuerarme (57, 57') den Kippwinkel einstellt.

13. Ein Bausatz von Teilen einer Verlängerungseinrichtung für ein motorisch angetriebenes Werkzeug nach irgendeinem der vorhergehenden Ansprüche mit einem Hauptausleger, der aus zwei oder drei Auslegerlängen zusammengebaut werden kann, mit Mitteln zum Zusammenbau einer Werkzeugwiege und zum Befestigen der Wiege am vorderen Ende des Hauptauslegers, mit auf dem Hauptausleger zwischen dessen Enden befestigten oder befestigbaren Griffmitteln, wobei der Griff ein Steuermittel zum Steuern des Betriebes eines von der Wiege getragenen, motorisch angetriebenen Werkzeugs enthält, und mit Steuerarmmitteln, die er entweder umfaßt oder die nahe daran schwenkbar befestigt sind und die gegenüber dem Ausleger schwenkbar verschiebbar sind, und mit mindestens einem Kraftübertragungsmittel, das zwischen dem Steuerarmmittel und der Wiege einbaubar ist, damit mindestens der Kippwinkel des auf dieser getragenen Werkzeugs verstellt werden kann.

## Patentansprüche (Patentansprüche für folgende(n) Vertragsstaat(en): GB)

1. Eine Verlängerungseinrichtung für ein motorisch angetriebenes Werkzeug mit einem Hauptausleger (10, 10'), mit einer an dessen vorderem Ende zum lösbaren Halten des Werkzeugs (14) schwenkbar befestigten Wiege (12), mit mit dem Ausleger an einer Stelle zwischen dessen Enden verbundenen Griffmitteln (20, 57), mit Steuermitteln (22, 62) auf oder an den Griffmitteln zum Steuern des Betriebes des motorisch angetriebenen Werkzeugs, mit einem zur Bewegung gegenüber dem Hauptausleger befestigten Steuerarmmittel (16; 57, 57') und mit das Steuerarmmittel und die Werkzeugwiege verbindenden Kraftübertragungsmitteln (18), dadurch gekennzeichnet, daß das Steuerarmmittel schwenkbar befestigt ist, so daß mindestens der Kippwinkel der Achse des Werkzeugs gegenüber der Achse des Hauptauslegers durch eine Schwenkbewegung des Steuerarmmittels gegenüber dem Ausleger einstellbar ist, und zwei Steuerarme umfaßt, die seitlich auf einander gegenüberliegenden Seiten des Hauptausleges verlaufen und deren Verlängerungen nach unten die Griffmittel (57, 57') umfassen, und Handgriffe (38, 38') auf diesen zum Ermöglichen des Erfassens der Griffmittel durch den Anwender unter Verwendung beider Hände bei Gebrauch vorgesehen sind.

2. Eine Einrichtung nach Anspruch 1, bei dem die Wiege und das Steuerarmmittel gegenüber dem Hauptausleger schwenkbar befestigt und so miteinander verbunden sind, daß nicht nur der Kippwinkel, sondern auch die Schwenkstellung des Werkzeugs in der Horizontalen einstellbar ist.

3. Eine Einrichtung nach Anspruch 2, bei der die Steuerarme und die Kraftübertragungsmittel so eingerichtet sind, daß eine differentielle Vor- und Rückbewegung der Steuerarme (57, 57') ein Schwenken des Werkzeugs in der Horizontalen bewirkt, während eine gleiche Vor- und Rückbewegung der Steuerarme (57, 57') den Kippwinkel einstellt.

4. Eine Einrichtung nach Anspruch 2 oder Anspruch 3, bei der die Steuerung des Kippwinkels und der Schwenkstellung in der Horizontalen wie oben genannt durch Verwendung von zwei das Steuerarmmittel und die Wiege verbindenden Kraftübertragungsmitteln bewirkt wird.

5. Eine Einrichtung nach Anspruch 4, bei der die beiden Kraftübertragungsmittel zwei Verbindungsstangen sind.

6. Eine Einrichtung nach irgendeinem der Ansprüche 1 bis 5, bei der das Werkzeug elektrisch angetrieben wird und der dafür notwendige elektrische Strom für das Steuermittel durch ein Kabel zugeführt wird, das zur Aufnahme der Längendehnung und -minderung bei Verstellen des Werkzeugs in seiner Stellung teilweise aufgewickelt ist.

7. Eine Einrichtung nach irgendeinem der Ansprüche 1 bis 6, bei der der Hauptausleger hinter den Griffmitteln ein Gegengewicht tragen kann.

8. Eine Einrichtung nach irgendeinem der Ansprüche 1 bis 7, bei der ein Stützmittel zum Übertragen mindestens eines Teils des Gewichtes der Ausrüstung auf die Schulter des Anwenders vorgesehen ist.

9. Ein Bausatz von Teilen einer Verlängerungseinrichtung für ein motorisch angetriebenes Werkzeug nach irgendeinem der vorhergehenden Ansprüche mit einem Hauptausleger, der aus zwei oder drei Auslegerlängen zusammengebaut werden kann, mit Mitteln zum Zusammenbau einer Werkzeugwiege und zum Befestigen der Wiege am vorderen Ende des Hauptauslegers, mit auf dem Hauptausleger zwischen dessen Enden befestigten oder befestigbaren Griffmitteln, wobei der Griff ein Steuermittel zum Steuern des Betriebes eines von der Wiege getragenen, motorisch angetriebenen Werkzeugs enthält, und mit Steuerarmmitteln, die er entweder umfaßt oder die nahe daran schwenkbar befestigt sind und die gegenüber dem Ausleger schwenkbar verschiebbar sind, und mit mindestens einem Kraftübertragungsmittel, das zwischen dem Steuerarmmittel und der Wiege einbaubar ist, damit mindestens der Kippwinkel des auf dieser getragenen Werkzeugs verstellt werden kann.

## Revendications (Revendications pour l'(les) Etat(s) contractant(s) suivant(s): DE, FR, NL)

1. Accessoire de prolongement pour outil à moteur, comprenant une perche principale (10, 10'), un berceau (12) monté de manière pivotante à une extrémité avant de la perche principale et destiné à supporter de façon amovible l'outil (14), un dispositif à poignée (20, 57) raccordé à la perche à une position comprise entre ses extrémités, un dispositif (22, 62) de commande placé sur le dispositif à poignée ou près de celui-ci pour la commande du fonctionnement de l'outil à moteur, un dispositif (16 ; 57, 57') à bras de commande monté afin qu'il se déplace par rapport à la perche principale, et un dispositif (18) de transfert de forces interconnectant le dispositif à bras de commande et le berceau de support d'outil, caractérisé en ce que le dispositif à bras de commande est monté de manière pivotante afin que l'angle d'inclinaison de l'axe de l'outil au moins soit réglable par rapport à l'axe de la perche principale par un mouvement de pivotement du dispositif à bras de commande par rapport à la perche.

2. Accessoire selon la revendication 1, dans lequel le dispositif de transfert de forces comprend une tige de commande (18 ; 18).

3. Accessoire selon la revendication 1 ou 2, dans lequel l'inclinaison du berceau de support d'outil est réglée par un mouvement de pivotement vers l'avant et vers l'arrière du dispositif à bras de commande par rapport à la longueur de la perche principale.

4. Accessoire selon la revendication 1, 2 ou 3, dans lequel le berceau et le dispositif à bras de commande sont montés de manière pivotante par rapport à la perche principale et sont interconnectés afin que non seulement l'inclinaison mais aussi le basculement de l'outil soient réglables.

5. Accessoire selon la revendication 4, dans lequel le basculement du berceau de l'outil est commandé par rotation du dispositif à bras de commande autour de la perche principale.

6. Accessoire selon la revendication 4 ou 5, dans lequel la commande d'inclinaison et de basculement indiquée précédemment peut fonctionner par utilisation de deux dispositifs de transfert de forces interconnectant le dispositif à bras de commande au berceau.

7. Accessoire selon la revendication 6, dans lequel les deux dispositifs de transfert de forces comprennent deux tiges parallèles de raccordement.

8. Accessoire selon l'une quelconque des revendications 1 à 7, dans lequel l'outil est commandé électriquement et un courant électrique qui lui est destiné est transmis du dispositif de commande par un câble dont une partie est enroulée pour permettre une augmentation et une réduction de longueur lorsque l'outil subit un ajustement de position.

9. Accessoire selon l'une quelconque des revendications 1 à 8, dans lequel la perche principale, derrière le dispositif à poignée, est destinée à porter un contrepoids.

10. Accessoire selon l'une quelconque des revendications 1 à 9, dans lequel le dispositif de support est destiné à transférer une partie au moins du poids de l'appareillage à l'épaule de l'utilisateur.

11. Accessoire selon l'une quelconque des revendications 1 à 10, dans lequel le dispositif à bras de commande comporte deux bras de commande (57, 57') qui s'étendent latéralement sur des côtés opposés de la perche principale, des prolongements vers le bas correspondants comportent des dispositifs à poignée (57, 57') et des poignées (38, 38') sont disposées sur ces dispositifs pour permettre la saisie des dispositifs à poignée par l'utilisateur avec les deux mains pendant l'utilisation.

12. Accessoire selon la revendication 11, dans lequel les bras de commande et le dispositif de transfert de forces sont disposés afin qu'un déplacement différentiel vers l'avant et vers l'arrière des bras de commande (57, 57') provoque un basculement de l'outil alors qu'un déplacement égal vers l'avant et vers l'arrière des bras de commande (57, 57') provoque l'ajustement de l'angle d'inclinaison.

13. Kit d'éléments d'un accessoire de prolongement pour outil à moteur selon l'une quelconque des revendications précédentes, comprenant une perche principale qui peut être assemblée à partir d'au moins deux tronçons de perche, un dispositif d'assemblage d'un berceau de support d'outil et de montage du berceau à une extrémité avant de la perche principale, un dispositif à poignée monté ou destiné à être monté sur la perche principale entre ses extrémités, la poignée comprenant un dispositif de commande du fonctionnement d'un outil à moteur porté par le berceau, et comprenant ou ayant un dispositif à bras de commande monté à proximité de la perche et mobile de manière pivotante par rapport à celle-ci, et au moins un dispositif de transfert de forces qui peut être interconnecté entre le dispositif à bras de commande et le berceau pour permettre au moins un ajustement de l'inclinaison d'un outil porté sur le berceau.

## Revendications (Revendications pour l'(les) Etat(s) contractant(s) suivant(s): GB)

1. Accessoire de prolongement pour outil à moteur, comprenant une perche principale (10, 10'), un berceau (12) monté de manière pivotante à une extrémité avant de la perche principale et destiné à supporter de façon amovible l'outil (14), un dispositif à poignée (20, 57) raccordé à la perche à une position comprise entre ses extrémités, un dispositif (22, 62) de commande placé sur le dispositif à poignée ou près de celui-ci pour la commande du fonctionnement de l'outil à moteur, un dispositif (16 ; 57, 57') à bras de commande monté afin qu'il se déplace par rapport à la perche principale, et un dispositif (18) de transfert de forces interconnectant le dispositif à bras de commande et le berceau de support d'outil, caractérisé en ce que le dispositif à bras de commande est monté de manière pivotante afin que l'angle d'inclinaison de l'axe de l'outil au moins soit réglable par rapport à l'axe de la perche principale par un mouvement de pivotement du dispositif à bras de commande par rapport à la perche, le dispositif à bras de commande comportant deux bras de commande qui s'étendent latéralement sur des côtés opposés de la perche principale, et des prolongements vers le bas correspondants comportent des dispositifs à poignée (57, 57') et des poignées (38, 38') qui sont disposées sur ces dispositifs pour permettre la saisie des dispositifs à poignée par l'utilisateur avec les deux mains pendant l'utilisation.

2. Accessoire selon la revendication 1, dans lequel le berceau et le dispositif à bras de commande sont montés de manière pivotante par rapport à la perche principale et sont interconnectés afin que non seulement l'inclinaison mais aussi le basculement de l'outil soient réglables.

3. Accessoire selon la revendication 2, dans lequel les bras de commande et le dispositif de transfert de forces sont disposés afin qu'un déplacement différentiel vers l'avant et vers l'arrière des bras de commande (57, 57') provoque un basculement de l'outil alors qu'un déplacement égal vers l'avant et vers l'arrière des bras de commande (57, 57') provoque l'ajustement de l'angle d'inclinaison.

4. Accessoire selon la revendication 2 ou 3, dans lequel la commande d'inclinaison et de basculement indiquée précédemment peut fonctionner par utilisation de deux dispositifs de transfert de forces interconnectant le dispositif à bras de commande au berceau.

5. Accessoire selon la revendication 4, dans lequel le dispositif de transfert de forces comprend deux tiges de raccordement.

6. Accessoire selon l'une quelconque des revendications 1 à 5, dans lequel l'outil est commandé électriquement et un courant électrique qui lui est destiné est transmis du dispositif de commande par un câble dont une partie est enroulée pour permettre une augmentation et une réduction de longueur lorsque l'outil subit un ajustement de position.

7. Accessoire selon l'une quelconque des revendications 1 à 6, dans lequel la perche principale, derrière le dispositif à poignée, est destinée à porter un contrepoids.

8. Accessoire selon l'une quelconque des revendications 1 à 7, dans lequel le dispositif de support est destiné à transférer une partie au moins du poids de l'appareillage à l'épaule de l'utilisateur..

9. Kit d'éléments d'un accessoire de prolongement pour outil à moteur selon l'une quelconque des revendications précédentes, comprenant une perche principale qui peut être assemblée à partir d'au moins deux tronçons de perche, un dispositif d'assemblage d'un berceau de support d'outil et de montage du berceau à une extrémité avant de la perche principale, un dispositif à poignée monté ou destiné à être monté sur la perche principale entre ses extrémités, la poignée comprenant un dispositif de commande du fonctionnement d'un outil à moteur porté par le berceau, et comprenant ou ayant un dispositif à bras de commande monté à proximité de la perche et mobile de manière pivotante par rapport à celle-ci, et au moins un dispositif de transfert de forces qui peut être interconnecté entre le dispositif à bras de commande et le berceau pour permettre au moins un ajustement de l'inclinaison d'un outil porté sur le berceau.
